Europäisches Patentamt

European Patent Office

Office européen des brevets

(19)

(11) **EP 1 192 597 B1**

(12) **EUROPÄISCHE PATENTSCHRIFT**

(45) Veröffentlichungstag und Bekanntmachung des Hinweises auf die Patenterteilung:
**18.12.2002  Patentblatt 2002/51**

(51) Int Cl.$^7$: **G06T 7/00**, G06T 5/00

(21) Anmeldenummer: **00936874.7**

(86) Internationale Anmeldenummer:
**PCT/EP00/05337**

(22) Anmeldetag: **09.06.2000**

(87) Internationale Veröffentlichungsnummer:
**WO 00/077736 (21.12.2000 Gazette 2000/51)**

(54) **VERFAHREN ZUR DETEKTION VON OBJEKTEN IM UMFELD EINES STRASSENFAHRZEUGS BIS IN GROSSE ENTFERNUNG**

METHOD OF DETECTING OBJECTS WITHIN A WIDE RANGE OF A ROAD VEHICLE

PROCEDE POUR DETECTER DES OBJETS DANS LE CHAMP PERIPHERIQUE D'UN VEHICULE ROUTIER JUSQU'A UNE GRANDE DISTANCE

(84) Benannte Vertragsstaaten:
**DE ES FR GB IT**

(30) Priorität: **11.06.1999  DE 19926559**

(43) Veröffentlichungstag der Anmeldung:
**03.04.2002  Patentblatt 2002/14**

(73) Patentinhaber: **DaimlerChrysler AG
70567 Stuttgart (DE)**

(72) Erfinder:
• **KNÖPPEL, Carsten
  D-70327 Stuttgart (DE)**
• **REGENSBURGER, Uwe
  D-73760 Ostfildern (DE)**

(56) Entgegenhaltungen:
**EP-A- 0 874 331**

## Beschreibung

Die Erfindung betrifft ein Verfahren zur Detektion von Objekten im Umfeld eines Straßenfahrzeugs bis in große Entfernung gemäß den gattungsbildenden Merkmalen des Patentanspruchs 1.

Um den Fahrer eines Kraftfahrzeuges im Straßenverkehr zu unterstützen, sind Fahrerassistenzsysteme entwickelt worden, die geeignet sind, vorausschauend gefährliche Situationen im Straßenverkehr zu erkennen. Derartige Fahrerassistenzsysteme können den Fahrer abhängig von seinem Verhalten entweder warnen oder in die Fahrzeugführung eingreifen. Hierdurch soll die Fahrsicherheit erhöht, der Fahrer von monotonen Fahraufgaben entlastet und somit das Fahren komfortabler werden.

Aufgrund der hohen Anforderungen an die Zuverlässigkeit von sicherheitssteigernden Systemen sind zum heutigen Zeitpunkt am Markt überwiegend Komfortsysteme verfügbar. Als Beispiele hierfür sind Einparkhilfen und intelligente Tempomaten zu nennen. Sicherheitssteigernde Fahrerassistenzsysteme sollen die umgebende Verkehrssituation in immer stärkerem Maße erfassen und berücksichtigen.

Aus der EP 0 558 027 B1 ist eine Einrichtung zum Erfassen des Abstands zwischen Fahrzeugen bekannt. Bei dieser Einrichtung erzeugt ein Paar von Bildsensoren ein Bild eines Objekts, das dem Fahrer angezeigt wird. Ein Bereich dieses Bildes wird in Fenster unterteilt. Die Abstände vom fahrenden Fahrzeug zum Objekt, das sich in den jeweiligen Fenstern befindet, werden erfaßt. Hierbei werden die Abstände durch Vergleichen zweier von unterschiedlichen Bildsensoren aufgenommener Bildinformationen in verschiedenen Fenstern berechnet. Aufgrund der ermittelten Abstandsinformationen wird das jeweilige Objekt ermittelt. Es wird ein den relevanten Bildbereich unterteilendes Gatter eingesetzt, welches das zu erfassende Objekt umgibt und eine weitere Bildinformation liefert. Eine Symmetrie dieser Bildinformation wird ermittelt und die Existenz eines vorausfahrenden Fahrzeugs wird durch Bestimmen einer Stabilität einer horizontalen Bewegung einer Symmetrielinie und einer zweiten Stabilität der Abstände über die Zeit vorhergesagt.

Diese bekannte Erfassungseinrichtung wird dazu eingesetzt, vor dem sich bewegenden Fahrzeug befindliche Fahrzeuge zu erfassen und zu erkennen. Eine zuverlässige Erkennung von Objekten wird jedoch nur im Nahbereich erreicht, da dort die einfache Erfassung von Symmetrielinien ausreichend stabil durchgeführt werden kann. Im Fernbereich reicht diese einfache Symmetrieerfassung aufgrund der geringen Auflösung im Bild und der sich daraus ergebenden Ungenauigkeit bei der Bestimmung des Objekts allein nicht mehr aus.

Jedoch sind gerade an eine zuverlässige Objekterkennung hohe Anforderungen zu stellen, damit dem Fahrer keine falschen Informationen gegeben werden, die zu falschen und gefährlichen Reaktionen führen können. Bei intelligenten Systemen könnte das Fahrzeug selbst aufgrund der Falschinformationen verkehrsgefährdend reagieren. Verläßliche Informationen sind etwa bei der spurgenauen Erkennung von Fahrzeugen in großer Entfernung sowohl in als auch entgegen der eigenen Fahrtrichtung unabdingbar.

Die DE 42 11 171 A1 schlägt zur Erkennung von interessierenden Mustern ein Verfahren vor, das Kreuzrelation kleiner singulärer Ausschnitte des gesamten interessierenden Musters durch blockweise fortschreitende Bilderkennung über ein eingelerntes Klassifikationsnetzwerk anwendet.

Aus der DE 43 08 776 C2 ist eine Einrichtung zum Überwachen des Außenraums eines Fahrzeugs bekannt, welches über eine Fahrspur auf einer Straße fährt, die durch ausgedehnte weiße Linien definiert ist. Mittels Bildverarbeitung wird der Verlauf der Straße anhand von dreidimensionalen Positionsinformationen von Abschnitten der weißen Linien ermittelt. Durch Ausnützen der dreidimensionalen Positionsinformationen der weißen Linien werden die weißen Linien von dreidimensionalen Objekten getrennt. Für jeden Abschnitt wird die vertikale Ausdehnung von möglichen Objekten ermittelt. Als Ergebnis lassen sich die Koordinaten für interessierende dreidimensionale Objekte, wie Kraftfahrzeuge, Motorräder oder Fußgänger, im Koordinatensystem des Fahrzeugs festlegen. Zusätzlich kann bestimmt werden, um welches Objekte es sich handelt.

Die in der DE 43 08 776 C2 beschriebene Vorgehensweise des Überwachens des Außenraums eines Fahrzeugs ist sehr rechenintensiv. Es ist stets notwendig den Verlauf des erfaßten Staßenbereichs zu ermitteln, um die Position von Objekten in diesem Straßenverlauf bestimmen zu können. Da in einem Kraftfahrzeug nur begrenzte Rechenleistung zur Verfügung steht, ist eine derartige Überwachungseinrichtung für den praktischen Einsatz wenig geeignet. Zudem ist die bekannte Überwachungseinrichtung stets auf das Vorhandensein weißer Begrenzungslinien angewiesen, welche sich nicht an allen Straßenverläufen finden lassen.

Aus der EP-A-0 874 331 ist bekannt, ein Abstandsbild in lateraler Richtung vom Fahrzeug weg in Bereiche aufzuteilen. Hierbei wird ein Histogramm über die Abstandswerte in den einzelnen Bereichen erstellt, um aus diesen Histogrammen die Abstände einzelner Objekte zu bestimmen. Die Möglichkeit einer Kollision oder Berührung mit Objekten bzw. anderen Fahrzeugen auf der Fahrbahn wird aus der Position und Größe der Objekte bzw. Fahrzeuge bestimmt. Die Relativgeschwindigkeit der Objekte zum eignen Fahrzeug wird durch Tracking der Objekte ermittelt. Eine sichere Aussage bezüglich der situativen Relevanz der Objekte ist nur nach einem sehr rechenintensiven Vorgang möglich, welcher eine praktische Anwendung in Straßenfahrzeugen in Frage stellt.

Die Aufgabe der Erfindung besteht darin, ein Verfahren zur Detektion von Objekten im Umfeld eines Straßenfahrzeugs bis in große Entfernung anzugeben, welches eine zuverlässige Erfassung von Objekten, insbesondere von Fahrzeugen vor und/oder hinter dem Straßenfahrzeug und deren situativer Relevanz aufgrund seiner Lage zum Straßenfahrzeug ermöglicht.

Diese Aufgabe wird gemäß der Erfindung durch die Merkmale des Patentanspruchs 1 gelöst. Die Unteransprüche betreffen vorteilhafte Weiterbildungen des Erfindungsgegenstandes.

Demgemäß ist ein Verfahren zur Detektion von Objekten im Umfeld eines Straßenfahrzeugs bis in große Entfernung vorgesehen, bei welchem die Entfernung eines bewegten oder stehenden Fahrzeugs zu einem oder mehreren Objekten durch entfernungsbasierte Bildsegmentierung mittels Stereobildverarbeitung berechnet wird und Eigenschaften der detektierten Objekte durch Objekterkennung in den segmentierten Bildbereichen ermittelt werden.

Die Bestimmung der Eigenschaften der detektierten Objekte soll der Klärung ihrer Relevanz für das eigene Fahrzeug dienen und somit zum Situationsverstehen beitragen.

Die Detektion kann vorzugsweise nach vorne oder nach hinten erfolgen und etwa für Stauwarnung, Abstandsregelung zum Vordermann oder Rückraumüberwachung eingesetzt werden. Ein wichtiger Gesichtspunkt ist hierbei, daß die situative Relevanz bzw. das Gefahrenpotential der detektierten Objekte aus deren Abstand zum eigenen Fahrzeug und der ermittelten Relativgeschwindigkeit ermittelt wird.

Anstelle der Auswertung von Stereobildpaaren, die von einer Stereoanordnung bestehend aus optischen Sensoren oder Kameras aufgenommen werden, können prinzipiell auch einzeln aufgenommene Bilder unterschiedlicher Herkunft zur Entfernungsbestimmung ausgewertet werden.

Es werden Bildbereiche erhabener Objekte und/oder flacher Objekte ermittelt.Erhabene Objekte und/oder flache Objekte werden durch Zusammenfassen von 3D-Punkten nach vorbestimmten Kriterien detektiert. Das Zusammenfassen wird auch als Clusterung bezeichnet. Dabei werden die erhabenen Objekte durch Merkmale mit ähnlichen Abstandswerten und flache Objekte durch Merkmale mit ähnlichen Höhenwerten bestimmt. Durch diese Vorgehensweise können Objekte nicht nur zuverlässig hinsichtlich ihrer Entfernung sondern auch hinsichtlich bestimmter Merkmale erkannt und bewertet werden. Eine Unterscheidung zwischen erhabenen und flachen Objekten ist somit leicht möglich.

Merkmale ähnlicher Abstandswerte und/oder ähnlicher Höhe werden zusammengefaßt, um Cluster zu bilden. Diese Unterscheidung zwischen erhabenen und flachen Objekten ist für die sichere Objekterkennung, z.B. die Erkennung von anderen Kraftfahrzeugen und die Unterscheidung zu Straßenmarkierungen sehr wichtig. Da heutzutage in modernen Kraftfahrzeugen entsprechend hohe Rechenleistungen realisierbar sind, ist eine derartige Bildsegmentierung mittels Entfernungsbestimmung und Clusterung sicher und schnell durchführbar

Die relevanten Objekte werden über die Zeit verfolgt und deren Abstand und laterale Position relativ zum eigenen Fahrzeug bestimmt, um das dynamische Verhalten der relevanten Objekte zu bewerten. Erst mit Kenntnis des dynamischen Verhaltens der ermittelten Objekte sind sinnvolle Reaktionen des Fahrers oder des Fahrzeuges möglich. Eine "vorausschauende" Fahrweise wird somit gefördert.

Weiterhin können durch dieses sogenannte Tracking sporadisch auftretende Phantomobjekte unterdrückt und die gesamte Erkennungsleistung gesteigert werden. So läßt sich die Anzahl der zu klassifizierenden extrahierten Bildbereiche im Bild reduzieren, wenn diese durch eine einfache zeitliche Verfolgung auf ihre örtliche Konsistenz hin überprüft werden.Durch Tracking der detektierten Objekte über die Zeit können die Objekteigenschaften wie z.B. Entfernung, Relativgeschwindigkeit und Relativbeschleunigung beispielsweise unter Verwendung eines Kalmanfilters von Meßrauschen befreit werden.

Zur Objekterkennung werden Objekthypothesen ermittelt, welche durch Vergleich von Objektmodellen verifiziert werden.

So lassen sich zur Objekterkennung die segmentierten Bildbereiche nach vorbestimmten, statistisch verifizierten 2D-Merkmalen der zu erkennenden Objekte abtasten und die detektierten Objekte unter Verwendung eines neuronalen Netzes zur Klassifikation einer bestimmten Objektart vergleichen. Auf diese Weise wird eine zuverlässige Objekterkennung durchgeführt.

Die detektierten, erhabenen Objekte können insbesondere Straßenfahrzeuge, Leitpfosten, Brückenpfeiler, Laternenmasten usw. sein sein, wohingegen die detektierten, flachen Objekte insbesondere Straßenmarkierungen und -begrenzungen wie Bordsteine, Leitplanken usw. sein können. Somit läßt sich beispielsweise die Position eines Straßenfahrzeugs in einer bestimmten Fahrspur auf einfache Weise ermitteln.

Zusätzlich ist es vorteilhaft, die relative Lage und die Relativgeschwindigkeit der detektierten Objekte zueinander und zum bewegten Fahrzeug zu kennen, um die situative Relevanz der detektierten Objekte zu ermitteln. Hierzu wird die Abstandsmessung ausgewertet und eine fahrspurgenaue Objektzuordnung ermittelt.

Bei der Bildsegmentierung kann eines der aufgenommenen Stereobildpaare nach signifikanten Merkmalen von zu erfassenden Objekten abgetastet werden. Der Abstand der signifikanten Merkmale läßt sich dann durch Vergleichen der jeweiligen Merkmale in einem Stereobild des Stereobildpaares mit denselben korrespondierenden Merkmalen im zeitgleich aufgenommenen anderen Stereobild des Stereobildpaares mittels Kreuzrelation bestimmen, wobei die dabei auftretenden Disparitäten ausgewertet werden.

Durch Bestimmen des Abstands signifikanter Merkmale im Pixelbereich werden 3D-Punkte in der realen Welt relativ zum Koordinatensystem der Meßeinrichtung ermittelt. Die so gewonnen Informationen von 3D-Punkten sind somit von unterschiedlichen Objekten bestimmt, wie etwa Fahrzeuge, Straßenmarkierungen, Leitplanken usw..

Neben dem beschriebenen stereobasierten Ansatz sind prinzipiell auch Objekterfassungsverfahren auf der Basis von Radarund/Oder Infrarotsignalen im Fernbereich möglich.

Anhand der nachstehenden Beschreibung im Zusammenhang mit den beigefügten Zeichnungen werden weitere Vorteile, Merkmale und Einzelheiten der Erfindung deutlicher.

Es zeigen:

Fig. 1    eine schematische Darstellung der Verfahrensschritte gemäß der Erfindung;

Fig. 2    eine schematische Darstellung zur Verdeutlichung des Prinzips der Entfernungsbestimmung bei parallel angeordneten Kameras gleicher Brennweite.

Fig. 3    eine schematische Darstellung zur Verdeutlichung des Prinzips der Korrespondenzsuche mittels Kreuzkorrelation;

Fig. 4    eine schematische Darstellung zur Verdeutlichung des Prinzips der 2D Merkmalsextraktion bei der Auswertung durch ein neuronales Netz gemäß der Erfindung.

Fig. 5    eine schematische Darstellung zur Verdeutlichung des Prinzips der Koordinatennormierung; und

Fig. 6    eine Darstellung eines Entfernungsprofils eines näherkommenden Fahrzeugs.

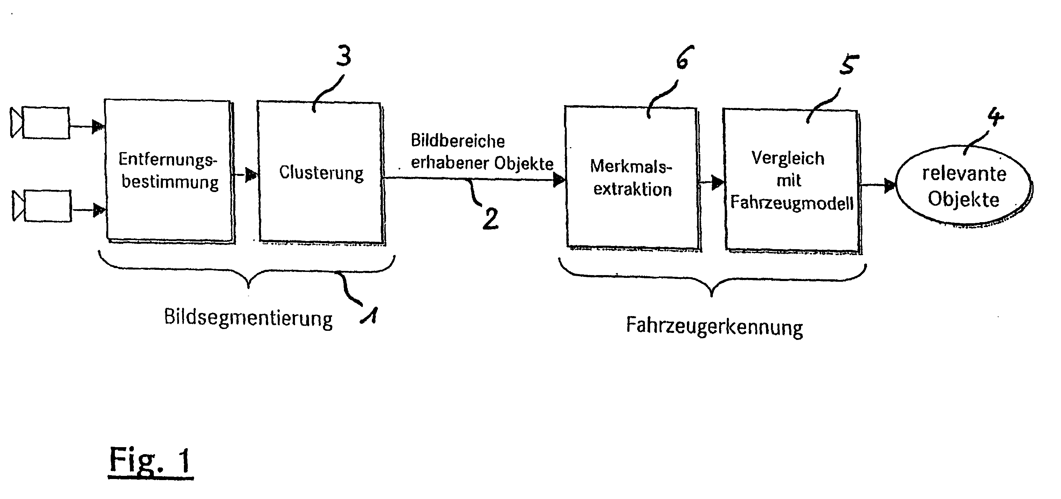

Im folgenden wird die Bildsegmentierung 1 mittels Stereobildverarbeitung beschrieben, bei der erhabene Objekte 2 detektiert werden. Dies wird durch Clusterung 3 einzelner Merkmale mit ähnlichen Entfernungen durchgeführt. Anschließend wird ein Fahrzeugerkennungsverfahren 5, 6 vorgestellt, mit dem Straßenfahrzeuge in den segmentierten Bildbereichen erkannt werden. Fahrzeugtypische Merkmale werden hierzu extrahiert 6 und anschließend mit der internen Fahrzeugmodellvorstellung 5 eines neuronalen Netzes 8 verglichen. Die prinzipielle Vorgehensweise ist schematisch in Figur 1 gezeigt.

Eine Monobildverarbeitung ist bei Einsatz ähnlicher Mittel und ähnlichem Vorgehen grundsätzlich auch möglich.

Die Eigenschaft der Erhabenheit von Straßenfahrzeugen gegenüber der Straße dient dem hier vorgestellten Verfahren zur Bildsegmentierung. Hierzu wird ein Stereokamerasystem eingesetzt, mit dem es möglich ist, Entfernungen signifikanter Merkmale, die im Kamerabild an Straßenfahrzeugen auftreten, zu bestimmen. Mittels dieser Information ist eine Aussage über erhabene Objekte 4 möglich. Die ständig wachsende Rechenleistung, die im Fahrzeug verfügbar ist, erlaubt heutzutage die echtzeitfähige Analyse von Stereobildpaaren.

Es ist auch möglich, zuverlässig zu ermitteln, auf welcher Fahrspur sich ein erfaßtes Straßenfahrzeug befindet. Es läßt sich dann eine Aussage über die situative Relevanz dieses erfaßten Straßenfahrzeugs aufgrund seiner Lage zum eigenen Fahrzeug treffen. Dementsprechend kann dann der Fahrer und/oder das eigene Fahrzeug reagieren.

Obwohl fahrzeugtaugliche Radarsysteme keine ausreichende laterale Auflösung für eine Spurzuordnung bieten, Infrarotsysteme Auflösungs- und Reichweitenprobleme besitzen und Ultraschall generell für den Nahbereich einsetzbar ist, ist es prinzipiell denkbar, diese Systeme anstelle oder in Kombination zu Stereokamerasystemen einzusetzen.

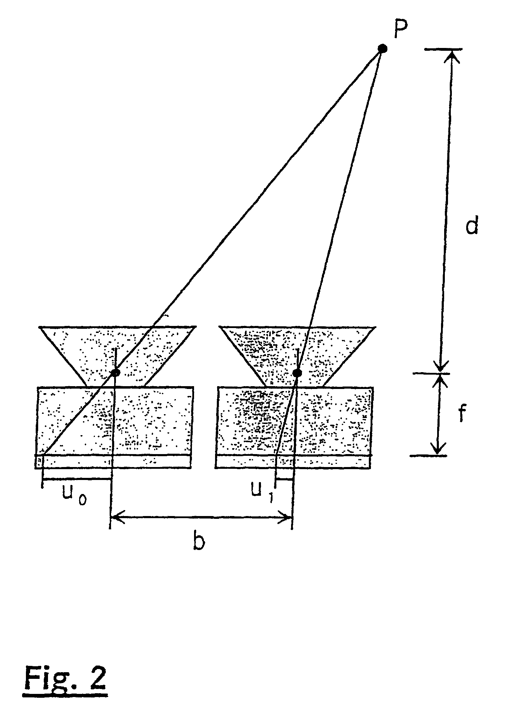

Das Prinzip der Entfernungsbestimmung bei der verwendeten parallelen Kameraanordnung ist in Figur 2 auf Basis des Lochkameramodells dargestellt. Der Punkt P in der Welt wird über die Projektionszentren auf die Sensoroberflächen jeder Kamera projiziert. $u_0$ bzw. $u_1$ stellen die Abweichung vom Projektionszentrum dar. Ihre Differenz

$$\Delta u = u_0 - u_1$$

wird als Disparität $\Delta u$ bezeichnet. Mittels Trigonometrie und den Größen der Kameraanordnung (Brennweite f und Basisweite b) kann der Abstand $d$ berechnet werden.

$$d = \frac{f \cdot b}{\Delta u}$$

Hierbei stellt $b$ die Basisbreite, $f$ die Brennweite und $d$ den Abstand zum Punkt P dar. $u_0$ und $u_1$ sind die Entfernungen der Projektionen des Punktes P auf die Sensoroberfläche.

Im ersten Verarbeitungsschritt der Bildsegmentierung wird in einem der Stereobildpaare nach signifikanten Merkmalen gesucht. Nur zu Versuchszwecken läßt sich eine entsprechende (nicht gezeigte) Darstellung auf einem Bildschirm oder einer anderen Anzeigeeinrichtung darstellen. Signifikante Merkmale liefern z.B. Kanten, die zuverlässig bei Straßenfahrzeugen auftreten. Die Orte der selektierten Kanten, die den zu korrelierenden Bildbereich des zweiten Verarbeitungsschritts definieren, lassen sich etwa durch rechteckige Rahmen in der Bildschirmdarstellung markieren.

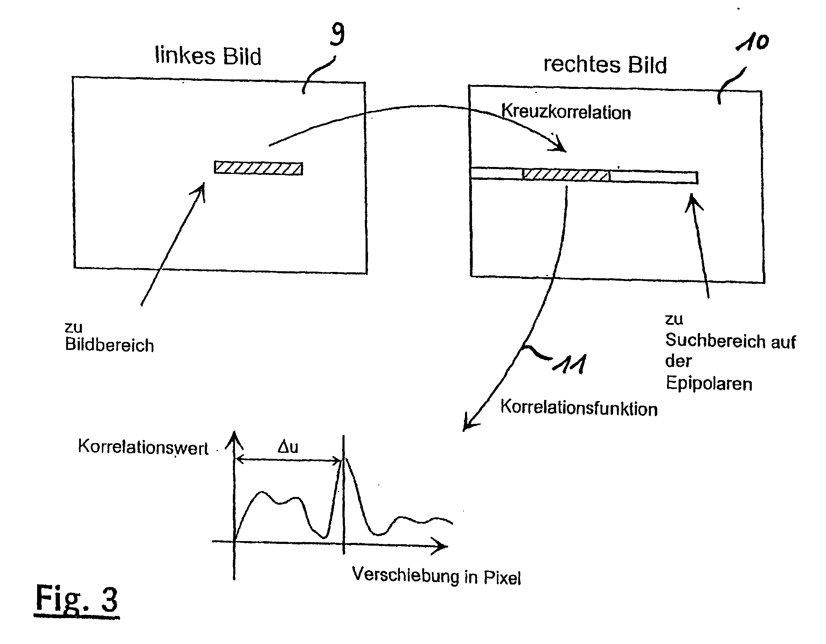

Zur Bestimmung des Abstandes der am Bildschirm dargestellten Merkmale werden die jeweiligen Disparitäten durch Vergleich mit dem zeitgleich aufgenommenen zweiten Stereobild ermittelt. Hierzu findet eine Suche jedes rechteckigen Bildbereiches mittels Kreuzkorrelation im korrespondierenden Bild statt. In Figur 3 ist eine schematische Darstellung zur Verdeutlichung des Prinzips der Korrespondenzsuche mittels Kreuzkorrelation 11 gezeigt.

Aufgrund der parallelen Ausrichtung der Kameras läßt sich der Suchbereich in vertikaler Richtung auf die Epipolare, in dem in Figur 3 gezeigten Falle die jeweilige Zeile, einschränken. In horizontaler Richtung wird im korrespondierenden Bild 9, 10 je nach zulässigen Disparitäten der entsprechende Suchbereich definiert.

Durch Verwendung der KKFMF (lokale mittelwertfreie, normierte Kreuzkorrelationsfunktion) als Korrelationsfunktion wirken sich Helligkeitsunterschiede in den Bildpaaren 9, 10, die z.B. durch unterschiedliche Sonneneinstrahlung oder unterschiedliche Regelung der Kameras auftreten, nur geringfügig auf den Korrelationswert aus.

Der Korrelationskoeffizient der KKFMF wird folgendermaßen berechnet:

$$KKFMF(x,y) = \frac{\sum_{j=0}^{n-1} \sum_{i=0}^{m-1} \left( \overline{F(i,j)} \cdot \overline{P_r(x+i,y+j)} \right)}{\sqrt{\sum_{j=0}^{n-1} \sum_{i=0}^{m-1} \overline{F(i,j)}^2 \cdot \sum_{j=0}^{n-1} \sum_{i=0}^{m-1} \overline{P_r(x+i,y+j)}^2}}$$

Die Werte $\overline{F(i,j)}$ und $\overline{P_r(x+i,y+j)}$ repräsentieren die mittelwertfreien Grauwerte der rechteckigen Bildbereiche $F(i,j)$ und $P_r(x+i,y+j)$. Aufgrund der Normierung bewegen sich die Ergebnisse der KKFMF im Intervall [-1,1]. Der Wert 1 steht für paarweise Übereinstimmung, -1 für entsprechend inverse Übereinstimmung.

Im letzten Verarbeitungsschritt der Bildsegmentierung findet eine Zusammenfassung (Clusterbildung) von Merkmalen mit ähnlichen Abstandswerten statt (vgl. Figur 1). Die relative Höhe der gebildeten Cluster wird mit einer festen Mindesthöhe verglichen, um ein erhabenes Objekt 2 sicherzustellen. Erhabene Objekte sind dabei durch Merkmale mit ähnlichen Abstandswerten und flache Objekte durch Merkmale mit ähnlichen Höhenwerten bestimmt.

Die resultierenden Cluster lassen sich zu Versuchszwecken in eine (nicht gezeigte) reale Bildschirmdarstellung der beobachteten Szene als Rahmen einblenden. Zusätzlich lassen sich an den Rahmen die zu den segmentierten Bildbereichen gehörenden Entfernungen in Zahlenwerten angeben.

Neben Fahrzeugen werden auch andere erhabene Objekte, wie z.B. Leitpfosten und Straßenränder segmentiert. Um fehlerhafte Objekthypothesen zu verwerfen, wird dem stereobasierten Objektsegmentierungsprozeß innerhalb der detektierten Bildbereiche eine 2D-Objekterkennung nachgeschaltet.

Im Folgenden wird nun die 2D-Merkmalsextraktion und die Fahrzeugerkennung beschrieben. Diese Verarbeitungsschritte sind ebenfalls in der Figur 1 dargestellt.

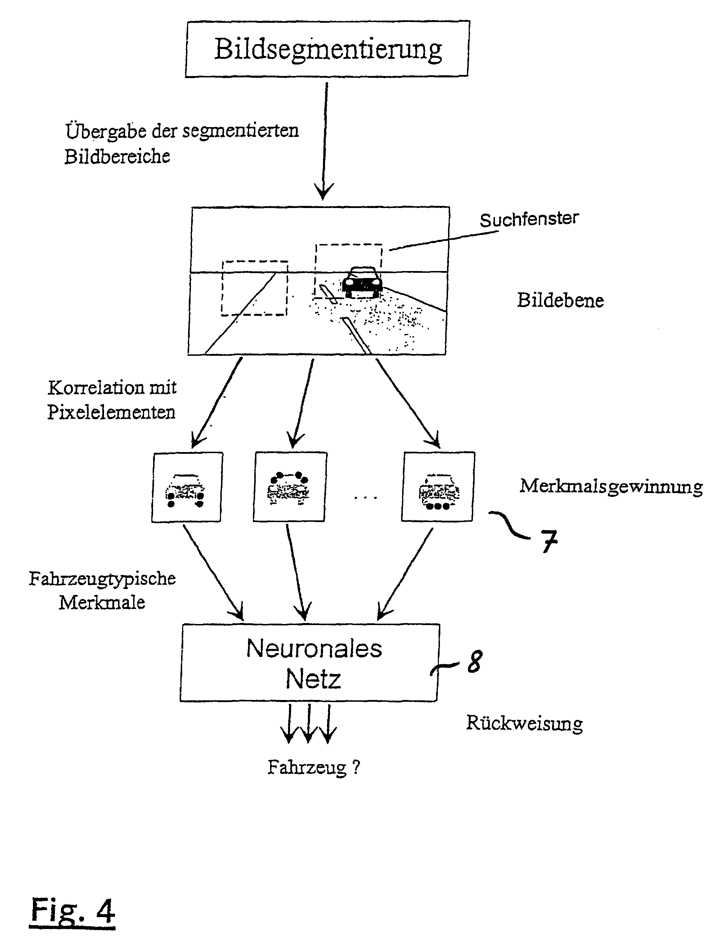

Straßenfahrzeuge weisen in der Bildebene signifikante Merkmale, z.B. Kanten und Ecken sowie Symmetrie auf. Diese Merkmale wurden zur Suche empirisch ermittelt und durch direkten Vergleich mit einem Fahrzeugmodell die Erkennung von Straßenfahrzeugen durchgeführt. In dem hier gezeigten Verfahren wird nach statistisch verifizierten 2D-Merkmalen 7 gesucht, die anschließend mit der internen Modellvorstellung von Fahrzeugen eines neuronalen Netzes 8 verglichen werden. In Figur 4 ist eine schematische Darstellung zur Verdeutlichung des Prinzips der 2D Merkmalsextraktion bei der Auswertung durch ein neuronales Netz gezeigt.

Zur Ermittlung signifikanter und statistisch verifizierter 2D-Merkmale 7 von Straßenfahrzeugen wurde ein Datensatz von 50 Bildern, die Autos in verschiedenen Szenen zeigen, zu Grunde gelegt. Unter Verwendung der unten aufgeführten Verfahren fand eine Bestimmung von mehreren 9x9 großen typischen Mustern statt, die in den verwendeten Szenen gehäuft auftreten (weiterhin als Vergleichsmuster bezeichnet).

Die Vergleichsmuster treten an bestimmten Stellen des Fahrzeuges typisch auf. Beispielsweise können die Merkmale im unteren Bereich der Fahrzeuge vorkommen. An diesen Stellen weisen die meisten Straßenfahrzeuge ähnliche strukturellen Flächen auf. Diese sind beispielsweise der Schatten unter dem Auto und die Ecken an den Reifen sowie der Verlauf der strukturellen Flächen an den Scheinwerfern.

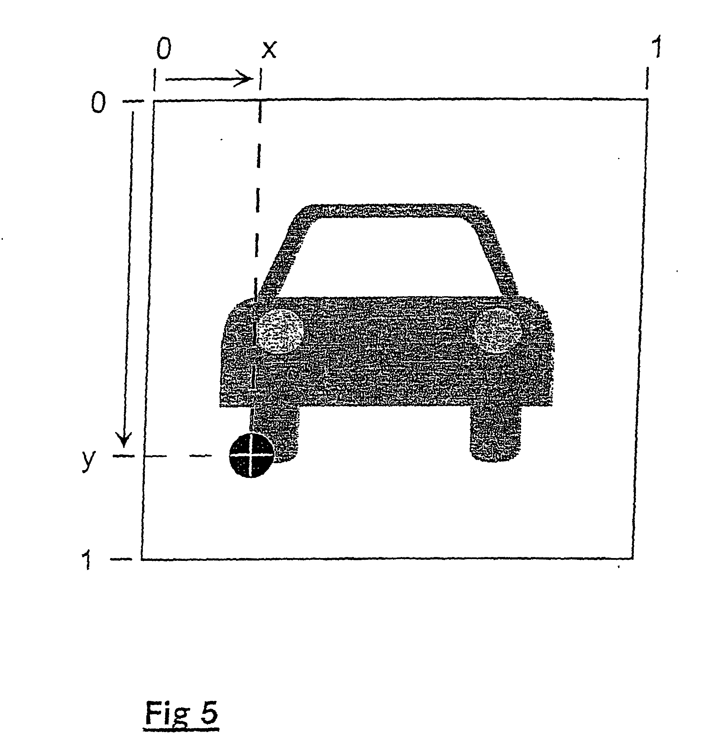

In den segmentierten Bildbereichen wird ein Suchfenster zur Berechnung der durch die vorgegebenen Vergleichsmuster bestimmten Merkmale definiert. Entsprechend der Entfernung des hypothetischen Objektes wird ein in der Größe angepaßtes Suchfenster definiert und mit den Vergleichsmustern korreliert. Die Orte im Suchfenster, die ein lokales Maximum der Korrelationsfunktion aufweisen, kennzeichnen signifikante Merkmale, wie Figur 5 zeigt.

Aus den Koordinaten der Extrema und der zugeordneten Vergleichsmuster erhält man die Eingangsmerkmale für das eingesetzte feedforward-Netz. Dieses wurde für das Auftreten typischer Merkmalskonstellationen, die Fahrzeuge kennzeichnen, trainiert.

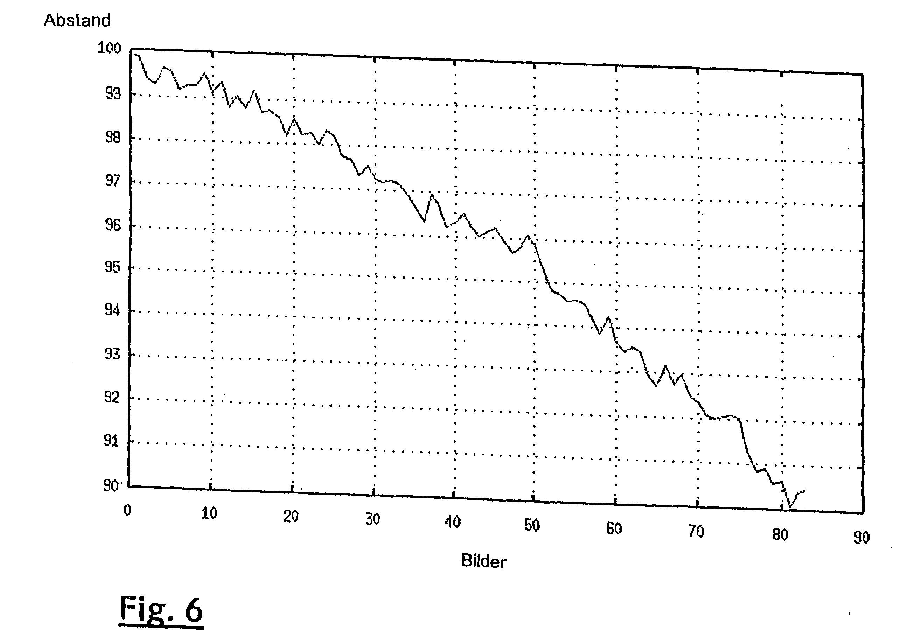

Das erfindungsgemäße, echtzeitfähige Verfahren zur stereobasierten Verfolgung von Objekten in großer Entfernung wurde in realen Straßenszenen erprobt. In Figur 6 sind die gemessenen

Entfernungsdaten eines sich nähernden Fahrzeugs dargestellt. Wie in Figur 6 ersichtlich, tritt in 100 Meter Entfernung eine Messungenauigkeit von ca. ± 50 cm auf.

Um die ermittelten Entfernungsdaten rauschfrei und weitgehend frei von Meßfehlern aufgrund fehlerhaft ermittelter Korrespondenzen zu halten, bietet sich der Einsatz eines Kalmanfilters an, der durch die zeitliche Betrachtung der Meßwerte aussagekräftigere Ergebnisse liefert. Durch die Erweiterung der 2D-Merkmalsextraktion um Texturmaße und Symmetrieoperatoren, sind weitere Potentiale zur Verbesserung des vorgestellten Verfahrens gegeben.

Zusammenfassend ist festzuhalten, daß mit dem erfindungsgemäßen Verfahren eine zuverlässige Abstandsbestimmung und Erkennung von Objekten, insbesondere von Staßenfahrzeugen vor und/oder hinter einem fahrenden Fahrzeug bis in große Entfernung möglich ist.

## Patentansprüche

1. Verfahren zur Detektion von Objekten im Umfeld eines Straßenfahrzeugs bis in große Entfernung, bei welchem die Entfernung eines bewegten oder stehenden Fahrzeugs zu einem oder mehreren Objekten durch entfernungsbasierte Bildsegmentierung (1) mittels Stereobildverarbeitung berechnet wird und Eigenschaften der detektierten Objekte durch Objekterkennung in den segmentierten Bildbereichen ermittelt werden, wobei
   Bildbereiche erhabener Objekte und/oder flacher Objekte ermittelt werden (2),
   erhabene Objekte und/oder flache Objekte durch Zusammenfassen (Clusterung) (3) von 3D-Punkten nach vorbestimmten Kriterien detektiert werden, wobei erhabene Objekte durch Merkmale mit ähnlichen Abstandswerten und flache Objekte durch Merkmale mit ähnlichen Höhenwerten bestimmt werden, und
   die relevanten Objekte (4) über die Zeit verfolgt (Tracking) und deren Abstand und laterale Position relativ zum eigenen Fahrzeug bestimmt werden, um das dynamische Verhalten der relevanten Objekte zu bewerten,
   **dadurch gekennzeichnet, daß**
   zur Objekterkennung Objekthypothesen ermittelt werden, welche durch Vergleich von Objektmodellen (5) verifiziert werden, wobei
   die segmentierten Bildbereiche nach vorbestimmten, statistisch verifizierten 2D-Merkmalen der zu erkennenden Objekte abgetastet werden (6, 7), und
   die detektierten Objekte unter Verwendung eines neuronalen Netzes (8) zur Klassifikation einer bestimmten Objektart verglichen werden.

2. Verfahren nach Anspruch 1,
   **dadurch gekennzeichnet, daß**
   die detektierten, erhabenen Objekte (4) insbesondere Straßenfahrzeuge und/oder die detektierten, flachen Objekte insbesondere Straßenmarkierungen und -begrenzungen sind.

3. Verfahren nach Anspruch 1 oder 2,
   **dadurch gekennzeichnet, daß**
   die relative Lage und die Relativgeschwindigkeit der detektierten Objekte (4) zueinander und zum bewegten Fahrzeug durch Auswerten der Abstandsmessung ermittelt werden, um eine fahrspurgenaue Objektzuordnung und/oder die situative Relevanz der detektierten Objekte zu ermitteln.

4. Verfahren nach einem der Ansprüche 1 bis 3,
   **dadurch gekennzeichnet, daß**
   eines der aufgenommenen Stereobildpaare (9, 10) nach signifikanten Merkmalen von zu erfassenden Objekten abgetastet wird, und
   der Abstand der signifikanten Merkmale durch Vergleichen der jeweiligen Merkmale in einem Stereobild des Stereobildpaares mit denselben korrespondierenden Merkmalen im zeitgleich aufgenommenen anderen Stereobild des Stereobildpaares (9, 10) bestimmt wird, wobei die dabei auftretenden Disparitäten mittels Kreuzkorrelation (11) ausgewertet werden.

5. Verfahren nach einem der Ansprüche 1 bis 4,
   **dadurch gekennzeichnet, daß**
   durch Bestimmen des Abstands signifikanter Merkmale im Pixelbereich 3D-Punkte in der realen Welt relativ zum Koordinatensystem der Meßeinrichtung bestimmt werden.

6. Verfahren nach einem der Ansprüche 1 bis 5,
   **dadurch gekennzeichnet, daß**
   die Objekte mittels Radar- und/oder Infrarotsensoren und/oder einer Stereo- oder Monoanordnung optischer Sensoren oder Kameras detektiert werden.

## Claims

1. A process for the detection of objects in the area surrounding a road vehicle to a large distance in which the distance between a moving or stationary vehicle and one or more objects is calculated using distance-based image segmentation (1) by means of stereoscopic image processing and properties of the detected objects are determined by means of object recognition in the segmented image areas,
   image areas of raised objects and/or flat objects are determined (2), raised objects and/or flat objects are detected by means of the clustering (3) of 3D points in accordance with predetermined criteria, raised objects being determined by means of features with similar distance values and flat objects by means of features with similar height values, and
   the objects (4) in question being tracked over time and their distance and lateral position relative to the vehicle itself being determined in order to evaluate the dynamic behaviour of the objects in question,
   **characterised in that**
   for the purposes of object identification, object hypotheses are determined which are verified by the comparison of object models (5),
   the segmented image areas being scanned in accordance with predetermined, statistically verified 2D features of the objects to be identified (6, 7), and
   the detected objects being compared using a neural network (8) in order to classify a specific type of object.

2. A process in accordance with claim 1,
   **characterised in that**
   the detected raised objects (4) are, in particular, road vehicles and/or the detected flat objects are, in particular, road markings and restrictions.

3. A process in accordance with claim 1 or 2,
   **characterised in that**
   the relative position and the relative speed of the detected objects (4) both in relation to each other and in relation to the moving vehicle are determined by evaluating distance measurements in order to carry out a process of lane-specific object allocation and/or determine the situational relevance of the detected objects.

4. A process in accordance with one of claims 1 to 3,
   **characterised in that**
   one of the stereo image pairs (9, 10) recorded is scanned in accordance with significant features of objects to be determined, and
   the distance to the significant features is determined by comparing the various features in one stereo image from the stereo image pair and the same corresponding features in the other stereo image from the stereo image pair recorded at the same time (9, 10), any disparities occurring being evaluated by means of cross-correlation (11).

5. A process in accordance with one of claims 1 to 4,
   **characterised in that**
   3D images in the real world are determined relative to the co-ordinate system of the measuring device by determining the distance to significant features in pixel range.

6. A process in accordance with one of claims 1 to 5,
   **characterised in that**

the objects are detected by means of radar and/or infra red sensors and/or a stereo or mono arrangement of optical sensors or cameras.

**Revendications**

1. Procédé pour la détection d'objets dans le champ périphérique d'un véhicule routier jusqu'à une grande distance, dans lequel la distance d'un véhicule mobile ou immobile, par rapport à un ou plusieurs objets, est calculée au moyen d'un traitement d'images stéréo, par segmentation d'images (1) basée sur la distance et où des propriétés des objets détectés sont déterminées par reconnaissance des objets dans les zones d'images segmentées, où l'on détermine des zones d'images d'objets en relief et/ou d'objets plats (2), où l'on détecte des objets en relief et/ou des objets plats par rassemblement (regroupement) (3) de points en 3 dimensions selon des critères prédéterminés, où des objets en relief sont déterminés par des caractéristiques ayant des valeurs de distance semblables et des objets plats par des caractéristiques ayant des valeurs de hauteur semblables, et où l'on suit dans le temps (pistage) les objets importants (4) et où l'on détermine leur distance et leur position latérale par rapport au véhicule propre, pour apprécier le comportement dynamique des objets importants, **caractérisé en ce que**, pour la reconnaissance des objets, l'on détermine des hypothèses d'objets, lesquelles hypothèses d'objets sont vérifiées par comparaison de modèles d'objets (5), où l'on analyse (6, 7) les zones d'images segmentées d'après des caractéristiques prédéterminées et vérifiées statistiquement, en 2 dimensions, des objets à reconnaître, et où, pour la classification d'un type d'objet déterminé, l'on compare les objets détectés en utilisant un réseau neuronal (8).

2. Procédé selon la revendication 1, **caractérisé en ce que** les objets détectés en relief (4) sont en particulier des véhicules routiers et/ou **en ce que** les objets détectés plats sont en particulier des marquages et des délimitations au sol.

3. Procédé selon la revendication 1 ou 2, **caractérisé en ce que** la position relative et la vitesse relative des objets détectés (4) sont déterminées l'une par rapport à l'autre et par rapport au véhicule mobile, par analyse de la mesure de distance, pour déterminer une affectation d'objets précise par rapport à la voie de circulation et/ou pour déterminer l'importance, en situation, des objets détectés.

4. Procédé selon l'une quelconque des revendications 1 à 3, **caractérisé en ce que** l'une des paires d'images stéréo enregistrées (9, 10) est analysée d'après des caractéristiques significatives d'objets à saisir, et **en ce que** la distance des caractéristiques significatives est déterminée par comparaison des caractéristiques respectives dans une image stéréo de la paire d'images stéréo, avec les mêmes caractéristiques correspondantes dans l'autre image stéréo de la paire d'images stéréo (9, 10), enregistrée en même temps, où les disparités se produisant alors sont analysées au moyen d'une corrélation croisée (11).

5. Procédé selon l'une quelconque des revendications 1 à 4, **caractérisé en ce que** l'on détermine des points en 3 dimensions dans le monde réel, par rapport au système de coordonnées du dispositif de mesure, en définissant la distance de caractéristiques significatives dans la zone de pixels.

6. Procédé selon l'une quelconque des revendications 1 à 5, **caractérisé en ce que** les objets sont détectés au moyen de détecteurs à radar et/ou de détecteurs à infrarouge et/ou d'un agencement stéréophonique ou monophonique de capteurs optiques ou de caméras.

relevante Objekte

4

5 Vergleich mit Fahrzeugmodell

6 Merkmals-extraktion

Fahrzeugerkennung

Bildbereiche erhabener Objekte

2

3 Clusterung

1

Entfernungs-bestimmung

Bildsegmentierung

**Fig. 1**

**Fig. 2**

rechtes Bild

10

Kreuzkorrelation

zu
Suchbereich auf
der
Epipolaren

Korrelationsfunktion

11

linkes Bild

9

zu
Bildbereich

Verschiebung in Pixel

$\Delta u$

Korrelationswert

**Fig. 3**

Fig. 4

Fig 5

Fig. 6

EP 1 192 597 B1